# EUROPÄISCHE PATENTANMELDUNG

(11) **EP 2 025 931 A1**
(43) Veröffentlichungstag der Anmeldung: **18.02.2009**
(21) Anmeldenummer: 08450114.7
(22) Anmeldetag: 24.07.2008
(51) Int. Cl.: F03G 7/04, F28D 15/02, F24J 3/08

(54) **Erdwärmesonde**

(30) Priorität: 13.08.2007 AT 4852007 U
(71) Anmelder: Ochsner, Karl, 4020 Linz (AT)
(72) Erfinder: Ochsner, Karl, 4020 Linz (AT)
(74) Vertreter: Hübscher, Helmut

(57) **Zusammenfassung**

Es wird eine Erdwärmesonde mit einem unten geschlossenen Wärmerohr (1) zur Aufnahme eines zweiphasigen Wärmeträgers und mit einem als Kondensator für den Wärmeträger dienenden Wärmetauscher (6) beschrieben, wobei das den Boden (3) des Wärmetauschergehäuses (4) durchsetzende obere Endstück (2) des Wärmerohres (1) im Bereich des Gehäusebodens (3) Durchtrittsöffnungen (7) für das Wärmeträgerkondensat aufweist. Um einen vorteilhaften Wärmeübergang zwischen den wärmeaustauschenden Medien zu erreichen, wird vorgeschlagen, dass das obere Endstück (2) des Wärmerohres (1) durch das Wärmetauschergehäuse (4) bis unter die Gehäusedecke (8) ragt.

## Beschreibung

Die Erfindung bezieht sich auf eine Erdwärmesonde mit einem unten geschlossenen Wärmerohr zur Aufnahme eines zweiphasigen Wärmeträgers und mit einem als Kondensator für den Wärmeträger dienenden Wärmetauscher, wobei das den Boden des Wärmetauschergehäuses durchsetzende obere Endstück des Wärmerohres im Bereich des Gehäusebodens Durchtrittsöffnungen für das Wärmeträgerkondensat aufweist.

Zur Nutzung der Erdwärme sind Erdwärmesonden bekannt (DE 203 20 409 U1), die wenigstens ein Wärmerohr mit einem zweiphasigen Wärmeträger, beispielsweise Kohlendioxid, aufweisen. Dieser durch die Erdwärme verdampfende Wärmeträger steigt innerhalb des unten geschlossenen Wärmerohres auf und wird mit Hilfe eines Wärmetauschers kondensiert, wobei das Wärmeträgerkondensat entlang der Innenwandung des Wärmerohres abfließt, um in einem Konvektionskreislauf durch die Erdwärme wieder verdampft zu werden. Die vom Wärmetauscher aufgenommene Kondensationswärme kann mit Hilfe einer Wärmepumpe, beispielsweise für die Erwärmung von Gebrauchswasser oder zum Betreiben einer Heizung, genützt werden. Nachteilig bei diesen bekannten Erdwärmesonden ist, dass der Wärmeübergang vom Wärmeträger auf das Kältemittel des Wärmetauschers unbefriedigend ist.

Der Erfindung liegt somit die Aufgabe zugrunde, eine Erdwärmesonde der eingangs geschilderten Art so auszugestalten, dass sich hinsichtlich des Wärmeübergangs vom Wärmeträger auf das Kältemittel des Wärmetauschers vorteilhafte Verhältnisse ergeben, ohne den Kreislauf der Konvektionsströmung des Wärmeträgers zu beeinträchtigen.

Die Erfindung löst die gestellte Aufgabe dadurch, dass das obere Endstück des Wärmerohres durch das Wärmetauschergehäuse bis unter die Gehäusedecke ragt.

Der Erfindung liegt die Erkenntnis zugrunde, dass durch den im Bodenbereich in das Wärmetauschergehäuse einströmenden Wärmeträgerdampf eine turbulente Strömung auftritt, die einen Wärmeaustausch zwischen warmem und bereits abgekühlten Dampf mit sich bringt, sodass sich eine entsprechend niedrigere durchschnittliche Temperaturdifferenz zwischen den wärmeaustauschenden Medien ergibt. Um eine möglichst hohe Temperaturdifferenz zwischen dem aus dem Wärmerohr ausströmenden, dampfförmigen Wärmeträger und dem Kältemittel des Wärmetauschers ausnützen zu können, wird das obere Endstück des Wärmerohres durch das Wärmetauschergehäuse bis in den Bereich der Gehäusedecke verlängert. Durch diese Maßnahme stellt sich eine Temperaturschichtung des dampfförmigen Wärmeträgers innerhalb des Gehäuses des Wärmetauschers mit der Wirkung ein, dass zumindest im Deckenbereich die höchste Dampftemperatur für den Wärmeübergang auf das Kältemittel des Wärmetauschers genützt werden kann, was insbesondere bei einem Wärmeaustausch im Gegenstrom zu einer entsprechend hohen Vorlauftemperatur des Kältemittels führt. Mit der zunehmenden Wärmeabgabe kondensiert der Wärmeträger, wobei das anfallende Wärmeträgerkondensat im Bodenbereich des Wärmetauschergehäuses gesammelt wird und durch die Durchtrittsöffnungen im Endstück im Kreislauf wieder in das Wärmerohr abfließt.

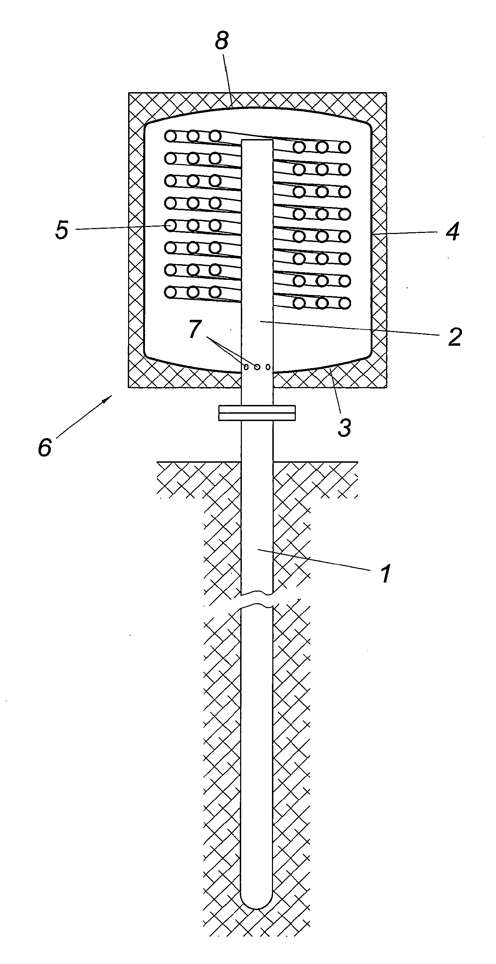

In der Zeichnung ist der Erfindungsgegenstand beispielsweise dargestellt, und zwar wird eine erfindungsgemäße Erdwärmesonde in einem vereinfachten Längsschnitt gezeigt.

Die dargestellte Erdwärmesonde weist ein in eine Erdbohrung eingesetztes, an seinem unteren Ende geschlossenes Wärmerohr 1 auf, an das ein oberes Endstück 2 angeflanscht ist. Mit diesem Endstück 2 durchsetzt das Wärmerohr 1 den Boden 3 eines Wärmetauschergehäuses 4, das wenigstens eine in mehreren Windungen verlegte Rohrschlange 5 für ein Kältemittel aufnimmt. Der dadurch gebildete Wärmetauscher 6 ist vorzugsweise in den Kältemittelkreis einer üblichen Wärmepumpe eingebunden.

Das Wärmerohr 1 führt einen zweiphasigen Wärmeträger, vorzugsweise Kohlendioxid, der Erdwärme aus dem ungebenden Erdreich über das Wärmerohr 1 aufnimmt und dabei verdampft. Der Dampf strömt in das Gehäuse 4 des Wärmetauschers 6 und erwärmt das durch die Rohrschlange 5 geführte Kältemittel. Der Wärmeträger selbst wird dabei gekühlt und kondensiert, wobei das entstehende Wärmeträgerkondensat durch Durchtrittsöffnungen 7 im Bereich des Gehäusebodens 3 wieder in das Wärmerohr 1 zurückfließt. Mit der vom Kältemittel aufgenommenen Kondensationswärme wird die angeschlossene Wärmepumpe betrieben. Der Wärmetauscher 6 dient daher im Bereich des Konvektionskreislaufes des Wärmeträgers als Kondensator, im Zuge des Kältemittelkreises der Wärmepumpe jedoch als Verdampfer.

Um einen vorteilhaften Wärmeübergang vom verdampften Wärmeträger auf das Kältemittel in der Rohrschlange 5 sicherstellen zu können, ist das Endstück 2 des Wärmerohres 1 im Gegensatz zu herkömmlichen Erdwärmesonden dieser Art verlängert, sodass es sich vom Boden 3 durch das Wärmetauschergehäuse 4 bis unter die Gehäusedecke 8 erstreckt. Diese Verlängerung des Endstückes 2 des Wärmerohres 1 erlaubt den Aufbau einer weitgehend ungestörten Wärmeschichtung des dampfförmigen Wärmeträgers innerhalb des Wärmetauschergehäuses 4, sodass sich im Bereich der wärmsten Schicht eine für den Wärmeübergang vorteilhafte hohe Temperaturdifferenz zwischen den wärmeaustauschenden Medien ergibt.

## Patentansprüche

1. Erdwärmesonde mit einem unten geschlossenen Wärmerohr (1) zur Aufnahme eines zweiphasigen Wärmeträgers und mit einem als Kondensator für den Wärmeträger dienenden Wärmetauscher (6), wobei das den Boden (3) des Wärmetauschergehäuses (4) durchsetzende obere Endstück (2) des Wärmerohres (1) im Bereich des Gehäusebodens (3) Durchtrittsöffnungen (7) für das Wärmeträgerkondensat aufweist, **dadurch gekennzeichnet, dass** das obere Endstück (2) des Wärmerohres (1) durch das Wärmetauschergehäuse (4) bis unter die Gehäusedecke (8) ragt.
